# EUROPÄISCHE PATENTSCHRIFT

(11) **EP 2 233 286 B1**
(45) Veröffentlichungstag und Bekanntmachung des Hinweises auf die Patenterteilung: **26.12.2012**
(21) Anmeldenummer: 09005987.4
(22) Anmeldetag: 30.04.2009
(51) Int. Cl.: B41C 1/04, B44C 5/04, H04N 1/60, B41F 11/00, B41F 9/02

(54) **Verfahren zur Herstellung von Plattenkörpern mit bedruckten Druckbögen**
Method for producing board bodies with printed sheets
Procédé de fabrication de corps de plaques dotés de feuilles imprimées

(30) Priorität: 24.03.2009 EP 09004181
(43) Veröffentlichungstag der Anmeldung: 29.09.2010
(73) Patentinhaber: Hülsta-Werke Hüls GmbH & CO. KG, 48703 Stadtlohn (DE); Flooring Industries Limited, SARL, 8070 Bertrange (LU)
(72) Erfinder: Tünte, Udo, 46348 Raesfeld (DE); Petersen, Frank, 48653 Coesfeld (DE)
(74) Vertreter: Weidener, Jörg Michael

(56) Entgegenhaltungen:
- EP-A1- 1 858 244
- EP-A2- 0 675 636
- EP-A2- 0 737 570
- WO-A1-2008/110275
- DE-A1- 19 947 397
- DE-A1- 19 963 084
- RODRIGUEZ M ED - INSTITUTE OF ELECTRICAL AND ELECTRONICS ENGINEERS: "A graphic arts perspective on RGB-to-CMYK conversion" PROCEEDINGS OF THE INTERNATIONAL CONFERENCE ON IMAGE PROCESSING. (ICIP). WASHINGTON, OCT. 23 - 26, 1995; [PROCEEDINGS OF THE INTERNATIONAL CONFERENCE ON IMAGE PROCESSING. (ICIP)], LOS ALAMITOS, IEEE COMP. SOC. PRESS, US LNKD- DOI:10.1109/ICIP.1995.53, Bd. 2, 23. Oktober 1995 (1995-10-23), Seiten 319-322, XP010197089 ISBN: 978-0-7803-3122-8

## Beschreibung

Die Erfindung betrifft ein Verfahren zur Herstellung von Plattenkörpern zur Verwendung im Boden-, Wand- oder Deckenbereich, wie Paneelen, sowie im Möbelbereich, nach dem Oberbegriff des Anspruchs 1.

Verfahren zur Herstellung von Plattenkörpern sind bereits seit langem aus der Praxis bekannt. Bei der Herstellung von Plattenkörpern der vorgenannten Art wird nach der Art der Bedruckung unterschieden, ob die Bedruckung im Dekortiefdruckverfahren oder aber im Digitaldruckverfahren erfolgt. Im Dekortiefdruck, wo eine Vielzahl von Farben und Farbmischungen zum Einsatz kommen, besteht die Druckform in der Regel aus mehreren Druckzylindern mit jeweils einer Kupferbeschichtung mit einer oder mehreren Kupferschichten. Die Zylinder können eine Breite von mehreren Metern und einen Durchmesser von bis zu 1,6 m haben. In die äußere Kupferschicht wird das Druckbild in Form sogenannter Näpfchen eingraviert, Die äußere Kupferschicht kann im übrigen verchromt werden, um eine bessere Haltbarkeit zu erreichen. Dies wird vor allem in höheren Auflagenbereichen genutzt. Die Art der Gravur im Tiefdruck ermöglicht in der Regel eine exakte und zuverlässige Wiederholbarkeit des Druckergebnisses. Zur Herstellung großer Mengen an bedrucktem Druckpapier ist das Dekortiefdruckverfahren derzeit das einzig wirtschaftliche Druckverfahren.

Nach dem Tiefdrucken wird das mit dem Dekor bedruckte Druckpapier in der Regel beharzt und dann in Druckbögen geschnitten. Anschließend werden die Druckbögen mit vorbereiten Grundkörpern verpreßt. Hierzu werden üblicherweise Kurztaktpressen (KT-Pressen) eingesetzt.

Die Erstellung von mehrfarbigen Dekoren, beispielsweise von bestimmten Holzmaserungen, mit bestimmten Farben ist ausgesprochen aufwendig und mit einer Vielzahl von Arbeitsschritten verbunden. Zunächst einmal wird üblicherweise eine Dekorvorlage vorbereitet. Hiermit ist das Erstellen eines Dekorbildes gemeint. Bei einem bestimmten Holzdekor werden dabei beispielsweise bestimmte Maserungen mit unterschiedlichen Schattierungen sowie entsprechende Astansätze oder dergleichen dargestellt. Nach Erstellung der Vorlage wird diese eingescannt. Es erfolgt dann eine Überarbeitung der Vorlage am Rechner. Ist die Vorlage des Designs am Rechner erstellt, wird üblicherweise ein Proof hergestellt, der dem Kunden, der die Vorlage bestellt hat, vorgestellt wird. Findet der Proof die Zustimmung des Kunden, werden aus den RGB-Daten des RGB-Farbsystems einzelne Farbkanäle für die Tiefdruckeinrichtung herausgezogen. Man spricht hier von Separation. Üblicherweise besteht das Dekor aus drei Mischfarben, so daß drei Farbkanäle erstellt werden. Dabei ist jeder Farbkanal einem Druckzylinder zugeordnet.

Da die Gravur von Produktions-Tiefdruckzylindern mit einem erheblichen Aufwand verbunden ist, ist es in den Druckereien üblich, das Tiefdruckergebnis zunächst im Labormaßstab zu erstellen. Hierzu dienen kleinere Tiefdruckmaschinen, die Laborzylinder aufweisen. Die Laborzylinder sind erheblich kleiner als die Produktionszylinder. Nach der Gravur der Laborzylinder werden die gewünschten Farben für die einzelnen Farbkanäle ausgewählt. Anschließend erfolgt ein Tiefdruck im Labormaßstab. Von dem Druckergebnis wird ein Stück Druckpapier als Labor-Druckbogen ausgeschnitten, der dann beharzt wird. Nach dem Beharzen wird der Labor-Druckbogen auf einem Grundkörper eines Plattenkörpers mit einer Laborpresse aufgepreßt. Anschließend wird das Dekor des im Labor hergestellten Plattenkörpers mit der ursprünglichen Dekorvorlage verglichen. Die einzelnen Farben für die einzelnen Zylinder werden in weiteren Schritten so angepaßt, bis das verpreßte Dekor der Vorlage möglichst nahe kommt.

Des weiteren ist es häufig so, daß die Dekorfarbe nicht der Vorlage entspricht. Von daher müssen die einzelnen Farbkanäle und die diesbezüglichen Farben überarbeitet werden. Nach entsprechender Änderung wird erneut der Laborzylinder graviert, im Labor tiefgedruckt, geharzt und verpreßt. Anschließend wird das Laborergebnis erneut mit der ursprünglichen Vorlage verglichen.

Des weiteren kommt es auch vor, daß das gedruckte Dekor nur durch Farbangeleichung nicht der Vorlage weiter angenähert werden kann. Wenn die Dekorvorlage trotz genauester Farbanpassung der einzelnen Zylinder nicht mit dem Laborzylindersatz erreicht werden kann, ist es in der Regel erforderlich, daß die Laborzylinder in ihrer Gravur überarbeitet werden müssen.

Da die Änderung der Laborzylinder und die Einstellung der richtigen Farbkanäle üblicherweise einige Tage in Anspruch nimmt und der Kunde der Dekorvorlage und der Drucker in der Regel nicht in einem Ort ansässig sind, bedeutet die korrekte Dekorerstellung einen erheblichen zeitlichen und kostenmäßigen Aufwand. Dabei ist zu berücksichtigen, daß es nicht selten vorkommt, daß eine Änderung der Farbauswahl und/oder der Gravur der Laborzylinder zwischen fünf- bis zehn- und zum Teil sogar mehr als zehnmal stattfindet, bis das gewünschte Dekor erstellt ist.

Ist das richtige Dekor von der Gravur und der Farbauswahl im Labormaßstab gefunden, werden die Labordaten hinsichtlich der Gravur und der Farbauswahl in Produktionsdaten überarbeitet. Anschließend erfolgt die Gravur der Produktionszylinder. Besondere Probleme bereitet in diesem Zusammenhang vor allem das Nachstellen der am Laborzylinder festgestellten Farbstellung für die drei Kanäle bzw. drei Produktionszylinder. Anschließend kann mit der Produktion begonnen werden.

Es ist erkennbar, daß das Erstellen eines Dekors und Einrichten einer Produktions-Tiefdruckvorrichtung mit erheblichem Aufwand verbunden ist.

Darüber hinaus ergibt sich beim Dekortiefdruck der Nachteil, daß, wenn die Farbmischung eines Farbkanals eines Produktionszylinders aufgebraucht ist, oder wenn das Dekor erneut produziert werden muß, es schwierig ist, den korrekten Farbton wieder nachzustellen. Die bei den üblichen Dekoren eingesetzten Farben der einzelnen Farbkanäle sind keine standardisierten Farben, sondern Farbmischungen. Da es gerade im Bereich der Holzdekore darauf ankommt, reproduzierbare Druckergebnisse zu haben, ergibt sich in der Produktion häufig eine Produktionspause von einigen Stunden, bis die korrekte Farbauswahl wieder vorlegt.

Aus der EP 1 858 244 A1 geht bereits ein Verfahren zur Erzeugung desselben Dekors unter Verwendung eines Musterdrucks hervor. Dabei ist vorgesehen, dass zwischen einem zur Begutachtung vorgesehenen Muster und einem serienmäßig gefertigten Endprodukt eine größtmögliche Übereinstimmung erzielt wird. Hierzu wird das betreffende Dekor zunächst auf ein erstes Trägermaterial als Musterdruck mittels eines Inkjet-Druckers gedruckt, das Dekor anschließend mit einer Kunstharzschicht abgedeckt, woran sich ein Verpressungsvorgang anschließt. Weiterhin wird das Dekor auf ein zweites Trägermaterial mittels einer Druckwalze im Tiefdruckverfahren gedruckt, wobei das Dekor dann mit einer Kunstharzschicht abgedeckt und anschließend ebenfalls verpresst wird. Weiterhin ist vorgesehen, dass der digitale Ausgangssatz sowohl zur Steuerung des Inkjet-Druckers als auch zur Herstellung der Druckwalze verwendet wird, so dass beim Vergleich der beiden Druckbilder die Anzahl der Bildpunkte pro Flächeneinheit auf dem ersten Trägermaterial mit der Anzahl der Bildpunkte pro Flächeneinheit auf dem zweiten Trägermaterial im Wesentlichen übereinstimmt, wobei die Größe der Bildpunkte und die Düsenabstände des Inkjet-Druckers auf die Größe der Rasterpunkte und die Rastergrößen beim Tiefdruckverfahren abgestimmt werden. Weiterhin werden für den Inkjet-Druck und den Tiefdruck identische Druckflüssigkeiten verwendet.

Aus der WO 2008/110275 A1 geht bereits ein Verfahren zum Herstellen eines flächigen, bedruckten Bauteils hervor, wobei die Bedruckung grundsätzlich mit allen bekannten Druckverfahren, d. h. auch dem Tiefdruckverfahren erfolgen kann, vorzugsweise jedoch mittels eines digitalen Druckverfahren und insbesondere mittels des Tintenstrahldruckverfahren erfolgt.

Aufgabe der vorliegenden Erfindung ist es nun ein Verfahren zur Herstellung von Plattenkörpern zur Verfügung zu stellen, das hinsichtlich seiner Arbeitsabläufe, insbesondere bezüglich des Drucks des Druckpapiers optimiert ist.

Zur Lösung der vorgenannten Aufgabe ist bei einem Verfahren der eingangs genannten Art nun vorgesehen, daß die Druckvorrichtung wenigstens eine Digitaldruckvorrichtung zum Digitaldruck und wenigstens eine gravierte druckzylinderaufweisende Tiefdruckeinrichtung zum Dekortiefdruck umfaßt und daß zum Druck des Dekors in Abhängigkeit der Menge des zu bedruckenden Druckpapiers entweder die Digitaldruckeinrichtung oder die Tiefdruckeinrichtung verwendet wird. Bei der Erfindung ist es also so, daß die Druckvorrichtung zur Produktion des bedruckten Druckpapiers nicht nur eine Druckeinrichtung sondern zwei alternativ einsetzbare Druckeinrichtungen aufweist, nämlich einerseits eine Digitaldruckeinrichtung und andererseits eine Tiefdruckeinrichtung. Bei beiden Einrichtungen handelt es sich um Produktions-Druckeinrichtungen, auf denen die Produktion des Druckpapiers zur Herstellung von bedruckten Druckbögen erfolgen kann. Dabei erfolgt die Auswahl der jeweiligen Druckeinrichtung in Abhängigkeit der Menge des zu bedruckenden Druckpapiers.

Im Zusammenhang mit der vorliegenden Erfindung ist festgestellt worden, daß grundsätzlich dann, wenn weniger als 1000 kg Druckpapier zu bedrucken ist, insbesondere weniger als 700 kg und vorzugsweise weniger als 500 kg, die Digitaldruckeinrichtung zum Druck verwendet wird. Bei Druckpapiermengen, die über die vorgenannten Mengen hinausgehen, ist es zweckmäßig, auf das Tiefdruckverfahren zurück zu greifen.

Im übrigen bietet es sich im Zusammenhang mit der vorliegenden Erfindung an, daß die RGB-Daten von einer Rechnereinrichtung in CMYK-Daten des CMYK-Farbsystems umgewandelt werden, wobei die Druckzylinder der Tiefdruckeinrichtung auf der Grundlage der CMYK-Daten graviert werden.

Anders als beim bekannten Tiefdruckverfahren, wo die RGB-Daten in einzelne Kanäle bzw. Laborzylinder aufgeteilt werden, wobei der Farbraum aus drei (Misch-)Farben besteht, ist es bei der Erfindung im Zusammenhang mit dem Tiefdruckverfahren nun so, daß auf das CMYK-Farbsystem zurückgegriffen wird. Die RGB-Daten werden hierzu in CMYK-Daten umgerechnet. Da auf ein anderes Farbsystem als beim bekannten Dekortiefdruckverfahren zurückgegriffen wird, ist es grundsätzlich sogar möglich, auf Versuche im Labormaßstab und den Einsatz einer Labor-Tiefdruckeinrichtung zu verzichten, wenngleich es bei der Erfindung natürlich auch möglich ist, gemäß dem erfindungsgemäßen Prinzip die in CMYK-Daten umgewandelten RGB-Daten in entsprechende Laborzylinder zu gravieren. Grundsätzlich ist dies jedoch nicht unbedingt erforderlich.

Im Ergebnis bietet die Erfindung den ganz wesentlichen Vorteil, daß mit der Produktion im Tiefdruck nach Erstellen der Dekorvorlage auf einer Anzeigeeinrichtung eines Rechners im RGB-Farbsystem sehr viel schneller begonnen werden kann, sofern die zu bedruckende Menge entsprechend groß ist. Die Farbausmusterung des bekannten Verfahrens mit drei Kanälen, über die drei immer wieder neu zusammenzustellende Mischfarben eingesetzt werden, entfällt hier vollständig. Letztlich wird bei der Erfindung in jedem Falle, also unabhängig davon, ob im Tiefdruck oder im Digitaldruck gedruckt wird, auf einen Vierfarbendruck zurückgegriffen, bei dem die jeweils eingesetzte Farbe konstant bzw. gleichbleibend ist. Dabei kann es so sein, daß im CMYK-Farbsystem die hellste Druckfarbe zuerst gedruckt wird. Es werden dann vier Druckzylinder eingesetzt, bei denen die Druckfarbenreihenfolge Y (Yellow), C (Cyan), M (Magenta) und K (Key-Schwarz als Farbtiefe) ist. Die Farbreihenfolge kann aber auch K, C, M, Y sein, wobei auch andere Reihenfolgen grundsätzlich möglich sind.

Üblicherweise wird eine Dekorvorlage, die als Dekor für Plattenkörper vorgesehen ist, zunächst manuell und/oder elektronisch vorbereitet. Unter dem Ausdruck "Vorbereitung" können im Ergebnis alle Vorgänge verstanden werden, über die ein Dekorbild hergestellt werden kann. Dies reicht von dem manuellen Zeichnen, was sehr aufwendig ist, bis zum einfachen Ausschneiden eines bereits vorhandenen Bildes. Bei der Dekorvorlage kann es sich beispielsweise auch um einen entsprechenden Schnitt durch einen Baumstamm handeln. Um die körperlich vorliegende bzw. vorbereitete Dekorvorlage in elektronischer Form bearbeiten zu können, wird diese eingescannt.

Ein wesentlicher Punkt der Bearbeitung besteht darin, daß sich beim Druck - unabhängig davon, ob im Tiefdruck oder im Digitaldruck gedruckt wird - eine sogenannte Rapportierung ergibt, so daß sich ein fortlaufendes, sich wiederholendes Dekorbild erhält. Dementsprechend werden die Daten der eingescannten Dekorvorlage entsprechend überarbeitet.

Vor oder nach der Überarbeitung zur Rapportierung wird verfahrensgemäß eine manuelle Farbmusterung der an der Anzeigeeinrichtung angezeigten Dekorvorlage vorgenommen. Die Farbmusterung, die letztlich am Bildschirm bzw. der Anzeigeeinrichtung der Rechnereinrichtung vorgenommen wird, erfolgt auf Basis des RGB-Farbsystems. Sobald die gewünschte Dekorfarbe erreicht ist, wird ein Proof der an der Anzeigeeinrichtung angezeigten Dekorvorlage mittels der Digitaldruckvorrichtung erstellt. Vorliegend wird zum Druck des Proofs die Produktion-Digitaldruckeinrichtung verwendet. Der Proof basiert auf dem CMYK-Farbsystem, dessen Farbraum durch die vorgenannten vier Farben eingeschränkt ist. Dementsprechend differiert in der Regel die Dekorfarbe des Proofs mit der über das RGB-Farbsystem auf der Anzeigeeinrichtung angezeigten Dekorfarbe.

Um eine schnelle Angleichung zwischen der Dekorfarbe des Proofs und der auf der Anzeigeeinrichtung dargestellten Dekorfarbe zu erzielen, wird eine automatische Kalibrierung vorgenommen. Hierzu kann ein Kalibrierungschart eingescannt werden, wobei die Farbdaten des Charts automatisch mit den RGB-Farbdaten verglichen und dann über entsprechende Korrekturfaktoren entsprechend angepaßt bzw. abgeglichen werden.

Nach der Kalibrierung kann es sich anbieten, daß ein weiterer Chart unter Berücksichtigung der kalibrierten CMYK-Daten erstellt wird. Dieser wird dann erneut mit dem im RGB-Farbsystem auf der Anzeigeeinrichtung dargestellten Dekor verglichen. Dieser Vorgang kann dann bedarfsweise mehrfach wiederholt werden, bis die Dekorfarbe des Charts der Dekorfarbe des auf der Anzeigeeinrichtung angezeigten Dekors entspricht.

In der Regel handelt es sich bei den im CMYK-Farbsystem eingesetzten Farben um definierte Farben. Dennoch kann es grundsätzlich Abweichungen geben. Da im Dekortiefdruck insbesondere für Holzdekore eine hohe Farbgenauigkeit und -echtheit erforderlich ist, bietet es sich besonders an, daß die gleichen Farbpigmente und/oder Farbzusammensetzungen für die Druckfarben des Proofdruckers und die Druckfarbe der Druckzylinder der Tiefdruckeinrichtung verwendet werden. Durch die gleichen Farbpigmente und/oder Farbzusammensetzungen ist, auch wenn die Druckfarben im Hinblick auf das Auftragsverfahren beim Digitaldruck einerseits und im Tiefdruck andererseits unterschiedlich sind, eine hohe Farbechtheit und Wiederholbarkeit der Dekorfarben gewährleistet.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich und in beliebiger Kombination den Gegenstand der vorliegenden Erfindung, unabhängig von ihrer Zusammenfassung in den Ansprüchen oder deren Rückbeziehung.

Es zeigt
- Fig. 1: eine schematische Darstellung des erfindungsgemäßen Verfahrens,
- Fig. 2: eine schematische Darstellung einer Dekortiefdruckeinrichtung und
- Fig. 3: eine schematische Darstellung eines Plattenkörpers.

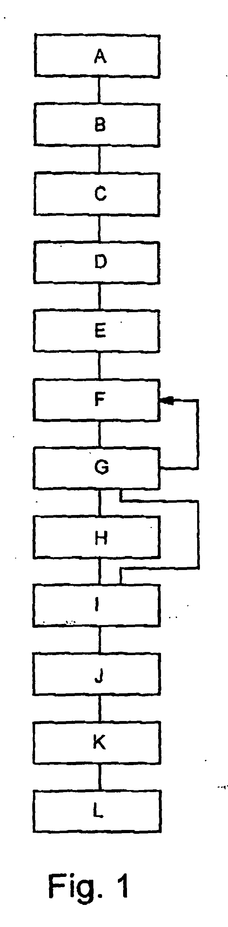

In Fig. 1 ist das erfindungsgemäße Verfahren schematisch mit den einzelnen Verfahrensschritten dargestellt. Zunächst wird im Verfahrensschritt A eine Dekorvorlage vorbereitet. Dies kann manuell und/oder elektronisch erfolgen. Als Dekor der Vorlage handelt es sich üblicherweise um eine bestimmte Holzmaserung.

Nach Erstellung der Vorlage wird diese dann im Schritt B eingescannt. Es ist darauf hinzuweisen, daß es grundsätzlich auch möglich ist, daß die Vorlage bereits elektronisch, das heißt an einem Rechner, erstellt wird, so daß das Einscannen entfallen kann.

Anschließend erfolgt im Schritt C eine Überarbeitung der Vorlage an einer Rechnereinrichtung.

Im Schritt D wird das erstellte Design dann dahingehend überarbeitet, daß sich eine Rapportierung ergibt mit der Folge, daß das Design sich quasi ständig wiederholt. Hinzuweisen ist darauf, daß der Schritt D allerdings nicht unbedingt erforderlich ist, da es Dekore gibt, die nicht unendlich gedruckt werden müssen, eine Rapportierung also nicht zwangsweise notwendig ist.

Nachdem das Design an eine Anzeigeeinrichtung der Rechnereinrichtung überarbeitet worden ist und das Design in der gewünschten Form von der Anzeigeeinrichtung im RGB-Farbsystem angezeigt wird, erfolgt im Schritt E eine Umwandlung der RGB-Daten durch die Rechnereinrichtung in CMYK-Daten des CMYK-Farbsystems. Bei der Umwandlung werden die RGB-Daten automatisch von der Rechnereinrichtung in CMYK-Daten umgewandelt.

Anschließend wird im Schritt F ein Proof, das heißt ein Farbausdruck, auf einer Digitaldruckeinrichtung erstellt. Bei dieser Einrichtung handelt es sich letztlich um eine Produktions-Digitaldruckeinrichtung, also eine solche, die zum Produktionsbetrieb ausgelegt ist.

Da das im RGB-Farbsystem dargestellte Design in der Regel vom im CMYK-Farbsystem dargestellten Design abweicht, wird eine Kalibrierung im Schritt G vorgenommen. Hierbei handelt es sich um einen automatischen Abgleich der Farben des auf der Anzeigeeinrichtung dargestellten Designs entsprechend den RGB-Farbsystem und des auf dem Proof gedruckten Designs entsprechend dem CMYK-Farbsystem. Hierzu kann das Design und/oder die Farben eines Kalibrierungscharts eingescannt werden, so daß über die Rechnereinrichtung unmittelbar die einzelnen Farben verglichen werden können. Dabei werden Ausgleichsfaktoren zur Farbenkorrektur berechnet, Auf der Grundlage des Kalibrierungsergebnisses werden dann die CMYK-Daten entsprechend angepaßt. Dieser Vorgang kann mehrfach wiederholt werden.

Da das CMYK-Farbsystem auf standardisierten Farben beruht, ist es grundsätzlich sogar möglich, daß die Umwandlung der Daten im Schritt E unter Berücksichtigung von bereits ermittelten bzw. vorbestimmten Kalibrierungsfaktoren erfolgt, die bereits die Abweichungen der Farben des im CMYK-Farbsystem gedruckten Proofs mit den im RGB-Farbsystem dargestellten Farben des auf der Anzeigeeinrichtung dargestellten Designs von vornherein berücksichtigt.

In Abhängigkeit von der zu bedruckenden Menge an Druckpapier wird dann entschieden, ob zum Bedrucken auf die Digitaldruckeinrichtung oder aber die Tiefdruckeinrichtung zurückgegriffen wird. Jedenfalls bei einer Menge von mehr als 1000 kg erfolgt der Druck des Druckpapiers im Tiefdruckverfahren. Hierzu erfolgt im Schritt H die Gravur der einzelnen Druckzylinder auf der Grundlage der CMYK-Daten, die von der Rechnereinrichtung unter Berücksichtigung des oder der Kalibrierungsfaktoren errechnet worden sind.

Nach der Gravur kann mit dem Druck des Druckpapiers im Schritt I im Tiefdruckverfahren begonnen werden. Es ergibt sich dann ein quasi unendliches Druckpapier mit sich auf dem Druckpapier entsprechend wiederholendem Dekor.

Ist hingegen nur eine geringe Menge an Druckpapier zu bedrucken, erfolgt der Druck im Digitaldruckverfahren mittels der Digitaldruckeinrichtung. Dies ist dann entsprechend mit der Rechnereinrichtung gekoppelt, die die CMYK-Daten, die gegebenenfalls kalibriert worden sind, übernimmt. In diesem Falle entfällt der Schritt H.

Nach dem Druck wird das bedruckte Druckpapier im Schritt J beharzt. Dazu wird das üblicherweise auf einer Rolle befindliche bedruckte Druckpapier abgerollt, durchläuft ein Harzbad und wird nach dem Trocknen wieder aufgerollt.

Im Schritt K erfolgt das Schneiden des Druckpapiers zu einer Vielzahl von Druckbögen, Das Druckpapier wird dazu jedenfalls in Längs-, in der Regel auch in Querrichtung zerteilt, so daß sich die einzelnen Druckbögen ergeben, deren Flächenabmaße den Flächenabmaßen der Grundkörper der Plattenkörper entsprechen.

Bei den Grundkörpern kann es sich um Körper aus Holz- oder Holzwerkstoffplatten, insbesondere HDF-, MDF-, Span- oder OSB-Platten, aber auch um Gipskarton- oder Gipsfaserplatten oder auch Kunststoffplatten handeln. Auch andere Materialien sind ohne weiteres möglich. Auf die Herstellung dieser Platten wird im einzelnen nicht eingegangen. Deren Herstellung ist im Stand der Technik grundsätzlich bekannt.

Im Schritt L werden die Druckbögen mit den Grundkörpern, beispielsweise in einer KT-Preßeinrichtung, verpreßt. Dabei kann gleichzeitig eine sich oberhalb des Druckbogens befindliche Schutzschicht mit verpreßt werden.

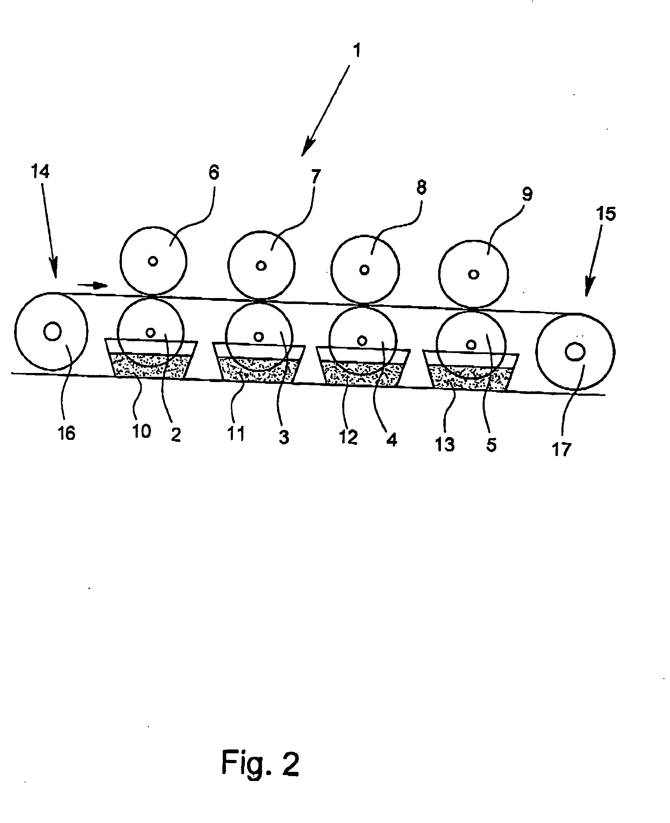

In Fig. 2 ist eine Dekortiefdruckeinrichtung 1 einer Vorrichtung dargestellt. Die Tiefdruckeinrichtung 1 weist vier gravierte Druckzylinder 2, 3, 4, 5 auf. Jedem Druckzylinder 2, 3, 4, 5 ist ein ungravierter Gegendruckzylinder 6, 7, 8, 9 zugeordnet. Im übrigen taucht jeder der Druckzylinder 2, 3, 4, 5 in einen Farbbehälter 10, 11, 12 ,13 ein. Dabei befindet sich im Farbbehälter 10 die Farbe gelb (Y), im Farbbehälter 11 die Farbe cyan (C), im Farbbehälter 12 die Farbe magenta (M) und im Farbbehälter 13 die Farbe schwarz (K). Den Druckzylindern 2, 3, 4, 5 vorgeschaltet ist eine Abwickeleinrichtung 14, nachgeschaltet ist eine Aufwi keleinrichtung 15. Von der Abwickeleinrichtung 14 wird unbedrucktes Druckpapicr 16 abgewickelt, das anschließend im Tiefdruckverfahren durch die Druckzylinder 2, 3, 4, 5 bedruckt wird. Anschließend wird das bedruckte Druckpapier 17 wieder aufgewickelt

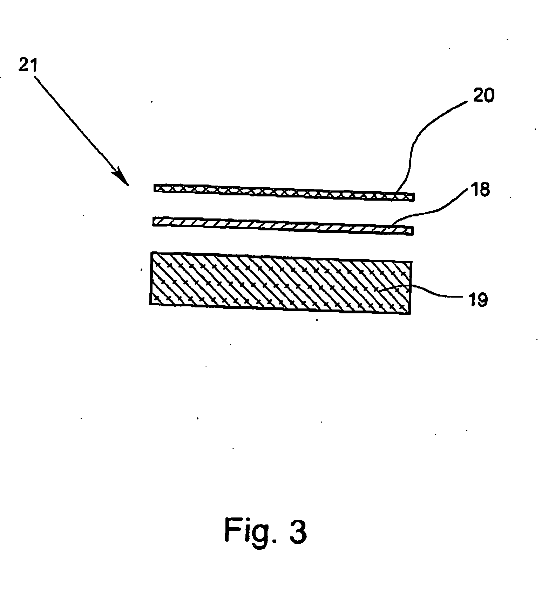

Wie zuvor bereits ausgeführt worden ist, wird das bedruckte Druckpapier 17 nach dem Bedrucken beharzt und anschließend geschnitten, so daß sich Druckbögen 18 ergeben, von denen einer schematisch in Fig. 3 dargestellt ist. Der Druckbogen 18 wird mit dem Grundkörper 19 und einer Schutzschicht 20 zu einem Plattenkörper 21 verpreßt, der anschließend beispielsweise als Paneele im Boden-, Wand- oder Deckenbereich oder aber als Möbelteil im Möbelbereich eingesetzt werden kann.

### Bezugszeichenliste

- 1: Tiefdruckeinrichtung
- 2: Druckzylinder
- 3: Druckzylinder
- 4: Druckzylinder
- 5: Druckzylinder
- 6: Gegendruckzylinder
- 7: Gegendruckzylinder
- 8: Gegendruckzylinder
- 9: Gegendruckzylinder
- 10: Farbbehälter
- 11: Farbbehälter
- 12: Farbbehälter
- 13: Farbbehälter
- 14: Abwickeleinrichtung
- 15: Aufwickeleinrichtung
- 16: unbedrucktes Druckpapier
- 17: bedrucktes Druckpapier
- 18: Druckbogen
- 19: Grundkörper
- 20: Schutzschicht
- 21: Plattenkörper

- A: Vorbereitung
- B: Scannen
- C: Überarbeitung
- D: Rapportierung
- E: Umwandlung
- F: Farbmusterung Proof
- G: Kalibrierung
- H: Gravur
- I: Druck
- J: Beharzen
- K: Schneiden
- L: Pressen

## Patentansprüche

1. Verfahren zur Herstellung von Plattenkörpern (21) zur Verwendung im Boden-, Wand- oder Deckenbereich, wie Paneelen, sowie im Möbelbereich, wobei der Plattenkörper (21) einen Grundkörper (19) aufweist, der mit einem beharzten, ein Dekor aufweisenden Druckbogen (18) aus bedrucktem Druckpapier verpreßt wird, wobei das Druckpapier mit dem sich auf dem Druckpapier vielfach wiederholenden Dekor von einer Druckeinrichtung bedruckt und das Druckpapier vor dem Verpressen in eine Vielzahl von Druckbögen (18) zerteilt wird, wobei vor dem Druck des Dekors eine Dekorvorlage vorbereitet und auf einer Anzeigeeinrichtung einer Rechnereinrichtung im RGB-Farbsystem angezeigt wird, wobei ein Proof der angezeigten Dekorvorlage auf einer Digitaldruckeinrichtung erstellt wird, wobei die Druckvorrichtungals Produktions-Druckeinrichtungen zur Produktion des Druckpapiers zur Herstellung von bedruckten Druckbögen wenigstens eine Digitaldruckeinrichtung zum Digitaldruck und wenigstens eine gravierte Druckzylinder (2, 3, 4, 5) aufweisende Tiefdruckeinrichtung (1) zum Dekortiefdruck umfaßt und wobei nach Erstellung des Proofs zum Druck des Dekors in Abhängigkeit der Menge des zu bedruckenden Druckpapiers entweder die Digitaldruckeinrichtung oder die Tiefdruckeinrichtung (1) verwendet wird.

2. Verfahren nach Anspruch 1, **dadurch gekennzeichnet, daß** bei weniger als 1000 kg zu bedruckendes Druckpapier, insbesondere weniger als 700 kg und vorzugsweise weniger als 500 kg, die Digitaldruckeinrichtung zum Druck verwendet wird.

3. Verfahren nach Anspruch 1 oder 2, **dadurch gekennzeichnet, daß** die RGB-Daten von der Rechnereinrichtung in CMYK-Daten des CMYK-Farbsystems umgewandelt werden und daß die Druckzylinder (2, 3, 4, 5) der Tiefdruckeinrichtung (1) auf der Grundlage der umgewandelten CMYK-Daten graviert werden.

4. Verfahren nach einem der vorhergehenden Ansprüche, **dadurch gekennzeichnet, daß** die vorbereitete Dekorvorlage eingescannt wird und daß, vorzugsweise, die Daten der eingescannten Dekorvorlage zur Rapportierung überarbeitet werden.

5. Verfahren nach einem der vorhergehenden Ansprüche, **dadurch gekennzeichnet, daß** eine Farbmusterung des an der Anzeigeeinrichtung angezeigten Dekors vorgenommen wird.

6. Verfahren nach einem der vorhergehenden Ansprüche, **dadurch gekennzeichnet, daß** ein Proof des an der Anzeigeeinrichtung angezeigten Dekors mittels der Digitaldruckeinrichtung erstellt wird.

7. Verfahren nach einem der vorhergehenden Ansprüche, **dadurch gekennzeichnet, daß** die Farben und/oder das Design eines Kalibrierungscharts zur Kalibrierung der von der Rechnereinrichtung umgewandelten CMYK-Daten verwendet werden.

8. Verfahren nach einem der vorhergehenden Ansprüche, **dadurch gekennzeichnet, daß** nach der Kalibrierung ein weiterer Kalibrierungschart aufgrund kalibrierter CMYK-Daten erstellt wird.

9. Verfahren nach einem der vorhergehenden Ansprüche, **dadurch gekennzeichnet, daß** die gleichen Farbpigmente und/oder Farbzusammensetzung für die Druckfarben der Digitaldruckeinrichtung und der Druckzylinder (2, 3, 4, 5) der Tiefdruckeinrichtung verwendet werden.

## Claims

1. Method for manufacturing plate-shaped bodies (21) for application in the range of floors, walls or ceilings, such as panels, as well as in the furniture range, wherein the plate-shaped body (21) comprises a basic body (19), which is pressed together with a printing sheet (18) of printed printing paper, which printing sheet is provided with resin and comprises a decor, wherein the printing paper is imprinted by a printing device with the decor which is repeated on the printing paper a plurality of times, and wherein the printing paper, prior to pressing, is divided into a plurality of printing sheets (18), wherein prior to printing the decor, a decor pattern is prepared and is represented in the RGB color system on a display device of a computer device, wherein a proof of the represented decor pattern is made on a digital printing device, wherein the printing device, as production printing devices for producing the printing paper for manufacturing printed printing sheets, comprises at least a digital printing device for digital printing and at least a gravure printing device (1) comprising engraved printing cylinders (2, 3, 4, 5) for decor gravure printing, and wherein, after making the proof, depending on the quantity of the printing paper to be printed, either the digital printing device or the gravure printing device (1) is applied for printing the decor.

2. Method according to claim 1, **characterized in that** with less than 1000 kg of printing paper to be printed, in particular less than 700 kg and preferably less than 500 kg, the digital printing device is used for printing.

3. Method according to claim 1 or 2, **characterized in that** the RGB data are converted by the computer device into CMYK data of the CMYK color system and that the printing cylinders (2, 3, 4, 5) of the gravure printing device (1) are engraved on the basis of the converted CMYK data.

4. Method according to any of the preceding claims, **characterized in that** the prepared decor pattern is scanned in and that preferably the data of the scanned-in decor pattern are revised for repeat determination.

5. Method according to any of the preceding claims, **characterized in that** a color matching of the decor represented on the display device is performed.

6. Method according to any of the preceding claims, **characterized in that** a proof of the decor represented on the display device is made by means of the digital printing device.

7. Method according to any of the preceding claims, **characterized in that** the colors and/or the design of a calibration chart are applied for calibration of the CMYK data converted by the computer device.

8. Method according to any of the preceding claims, **characterized in that** after calibration, a further calibration chart on the basis of calibrated CMYK data is made.

9. Method according to any of the preceding claims, **characterized in that** the same color pigments and/or color composition are used for the printing inks of the digital printing device and the printing cylinders (2, 3, 4, 5) of the gravure printing device.

## Revendications

1. Procédé pour la fabrication de corps en forme de plaques (21) à utiliser dans le domaine des sols, des murs ou des plafonds, tels que des panneaux, et également dans le domaine du mobilier, le corps en forme de plaque (21) présentant un corps de base (19) qui est comprimé avec une feuille (18) enduite de résine, présentant une décoration, constituée de papier d'impression imprimé, le papier d'impression étant imprimé avec la décoration qui se répète à de multiples reprises sur le papier d'impression par un mécanisme d'impression et le papier d'impression étant subdivisé, avant la compression en une multitude de feuilles (18), dans lequel, avant l'impression de la décoration, on prépare un original de décoration et on l'affiche sur un mécanisme d'affichage d'un ordinateur dans le système de couleurs RGB ; dans lequel on produit une épreuve de l'original de décoration affiché sur un mécanisme d'impression numérique, le dispositif d'impression comprenant, à titre de mécanismes d'impression de production pour la production du papier d'impression pour la fabrication de feuilles imprimées, au moins un mécanisme d'impression numérique pour l'impression numérique et au moins un mécanisme d'impression en creux (1) présentant des cylindres d'impression gravés pour l'impression de la décoration en creux ; et dans lequel, après la production de l'épreuve, pour l'impression de la décoration, en fonction de la quantité du papier d'impression à imprimer, on utilise, soit le mécanisme d'impression numérique, soit le mécanisme d'impression en creux (1).

2. Procédé selon la revendication 1, **caractérisé en ce qu'**on utilise, en présence de moins de 1000 kg de papier d'impression à imprimer, en particulier en présence de moins de 700 kg et de préférence en présence de moins de 500 kg, on utilise le mécanisme d'impression numérique pour l'impression.

3. Procédé selon la revendication 1 ou 2, **caractérisé en ce que** les données RGB sont transformées par l'ordinateur en données CMYK du système de couleurs CMYK; et **en ce que** les cylindres d'impression (2, 3, 4, 5) du mécanisme d'impression en creux (1) sont gravés sur base des données CMYK transformées.

4. Procédé selon l'une quelconque des revendications précédentes, **caractérisé en ce que** l'original de décoration préparé est scanné ; et **en ce que**, de préférence, les données de l'original de décoration scannées sont traitées pour être rapportées.

5. Procédé selon l'une quelconque des revendications précédentes, **caractérisé en ce qu'**on procède à un examen des couleurs de la décoration affichée sur le mécanisme d'affichage.

6. Procédé selon l'une quelconque des revendications précédentes, **caractérisé en ce qu'**on produit une épreuve de la décoration affichée sur le mécanisme d'affichage, au moyen du mécanisme d'impression numérique.

7. Procédé selon l'une quelconque des revendications précédentes, **caractérisé en ce qu'**on utilise les couleurs et/ou le motif d'un diagramme d'étalonnage pour l'étalonnage des données CMYK transformées par l'ordinateur.

8. Procédé selon l'une quelconque des revendications précédentes, **caractérisé en ce que**, après l'étalonnage, on élabore un diagramme d'étalonnage supplémentaire sur base des données CMYK étalonnées.

9. Procédé selon l'une quelconque des revendications précédentes, **caractérisé en ce qu'**on utilise les mêmes pigments et/ou les mêmes compositions de couleurs pour les encres du mécanisme d'impression numérique et des cylindres d'impression (2, 3, 4, 5) du mécanisme d'impression en creux.
